(19) **Europäisches Patentamt**

**European Patent Office**

**Office européen des brevets**

(11) **EP 0 801 508 B1**

(12) ## EUROPEAN PATENT SPECIFICATION

(45) Date of publication and mention
of the grant of the patent:
**06.02.2002 Bulletin 2002/06**

(51) Int Cl.$^7$: **H04N 9/64**

(21) Application number: **97302502.6**

(22) Date of filing: **11.04.1997**

(54) **Colour gamut detecting circuit**

Farbtonbereichsdetektorschaltung

Circuit pour détecter une gamme de couleur

(84) Designated Contracting States:
**DE FR GB**

(30) Priority: **11.04.1996 JP 8982296**

(43) Date of publication of application:
**15.10.1997 Bulletin 1997/42**

(73) Proprietor: **SONY CORPORATION**
**Tokyo 141 (JP)**

(72) Inventor: **Kameyama, Takashi,**
**c/o Intellectual Property Dept.**
**Shinagawa-ku, Tokyo 141 (JP)**

(74) Representative: **Turner, James Arthur et al**
**D. Young & Co., 21 New Fetter Lane**
**London EC4A 1DA (GB)**

(56) References cited:
**EP-A- 0 552 016          EP-A- 0 620 692**
**US-A- 5 031 049**

- **PATENT ABSTRACTS OF JAPAN vol. 16, no. 97**
**(E-1176), 10 March 1992 & JP 03 277089 A (SONY**
**CORP)**

**Description**

This invention relates to colour gamut detection.

Conventionally, video cameras incorporate a contour correcting circuit for compensating response degradation and emphasizing sharpness of an image sensing device used. If the skin of a person for example is shot by a video camera incorporating such a contour correcting circuit, adjustment is made such that the degree of contour emphasis is suppressed at the portion of skin tone in order to make the skin look beautiful. The processing for suppressing the degree of the contour emphasis for skin tone is called skin tone detail processing.

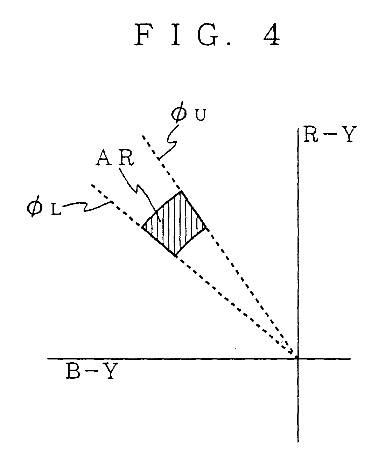

In skin tone detail processing, as shown in Figure 4, colour difference signals R-Y and B-Y are added together to determine hues $\phi$ U and $\phi$ L by varying the ratio of addition. At the same time, the output of the addition is entered in a comparing circuit to be compared with a reference voltage, thereby generating a gate signal that indicates whether a desired colour gamut AR indicated by hatching, a skin tone portion for example, has been obtained, Thus, because colour gamut detection is performed by use of the colour difference signals R-Y and B-Y of which signal levels are changed by a luminance signal Y, if a change occurs in the luminance level by a change in lighting condition or aperture, the signal levels of the colour difference signals R-Y and B-Y change to disable correct detection of the skin tone portion.

European Patent Application Publication No. EP-A-0 552 016 discloses a colour gamut detecting circuit according to the pre-characterising part of claim 1 hereof.

US Patent No. US-A-5 031 049 discloses an automatic object image follow-up device, for carrying out focus detection and adjustment in a video camera, that employs normalised values (R-Y)/Y and (B-Y)/Y.

EP-A-0 620 692 discloses a tint detection circuit for automatically detecting a desired tint in a video signal. Relative colour difference signals (G-R)/R and (G-B)/B are used.

According to the present invention there is provided a colour gamut detecting circuit comprising:

gamut setting means for setting a colour gamut by use of first colour information and second colour information; and
detect signal generating means for determining whether an input signal is inside said colour gamut to generate a detect signal;

characterising in that:

the gamut setting means is operative to set said first colour information as

$$x = (R-W)/W$$

and said second colour information as

$$y = (B-W)/W,$$

where W is a luminance signal W, R is a is a red signal R, and B is a blue signal;
the gamut setting means is operative to set a reference colour x0 of said first colour information, a reference colour y0 of said second colour information, a detection threshold value xth indicating a gamut range of said first colour information, and a detection threshold value yth indicating a gamut range of said second colour information; and
said detect signal generating means is operative to multiply said reference colours x0 and y0, said detection threshold values xth and yth, and said first colour information and said second colour information by said luminance signal W to generate a detect signal based on whether the following conditions are satisfied or not:

$$|W(x0+1)-R| \leq Wxth$$

$$|W(y0+1)-B| \leq Wyth.$$

Embodiments of the present invention can provide a colour gamut detecting circuit that can detect a specific colour gamut with precision by a simple constitution and an image sensing apparatus using this colour gamut detecting circuit.

According to embodiments of the present invention, a colour gamut is set by use of the first colour information and the second colour information and a detect signal indicating whether an input signal falls in the range of this colour gamut is generated, thereby allowing colour gamut detection without being affected by luminance. In addition, the image sensing apparatus using the inventive gamut detecting circuit according to the present invention can perform desired correction on a particular colour gamut without being affected by luminance.

The invention will now be described by way of example with reference to the accompanying drawings, throughout which like parts are referred to by like references, and in which:

FIG. 1 is a diagram illustrating a constitution of an image sensing apparatus;
FIG. 2 is a diagram illustrating a constitution of the colour gamut detecting circuit 40;
FIG. 3 is a diagram illustrating operations of the colour gamut detecting circuit 40; and

FIG. 4 is a diagram describing conventional colour gamut detecting operation.

In the figures, like reference characters designate like or corresponding parts throughout:

11 ... iris, 13R, 13G, 13B ... CCD image sensors, 16 ... sensor driver, 20 ... image enhancer, 25 ... controller, 32R, 32G, 32B ... filters, 40 ... colour gamut detecting circuit, 41 ... W matrix section, 44, 45, 55, 65 ... selectors, 46 ... select signal generator, 47, 48 ... multipliers, 60 ... subtractor, 61 ... absolute value calculating section, 65 ... comparator, 80 ... coefficient supply circuit, 85 ... linear matrix circuit.

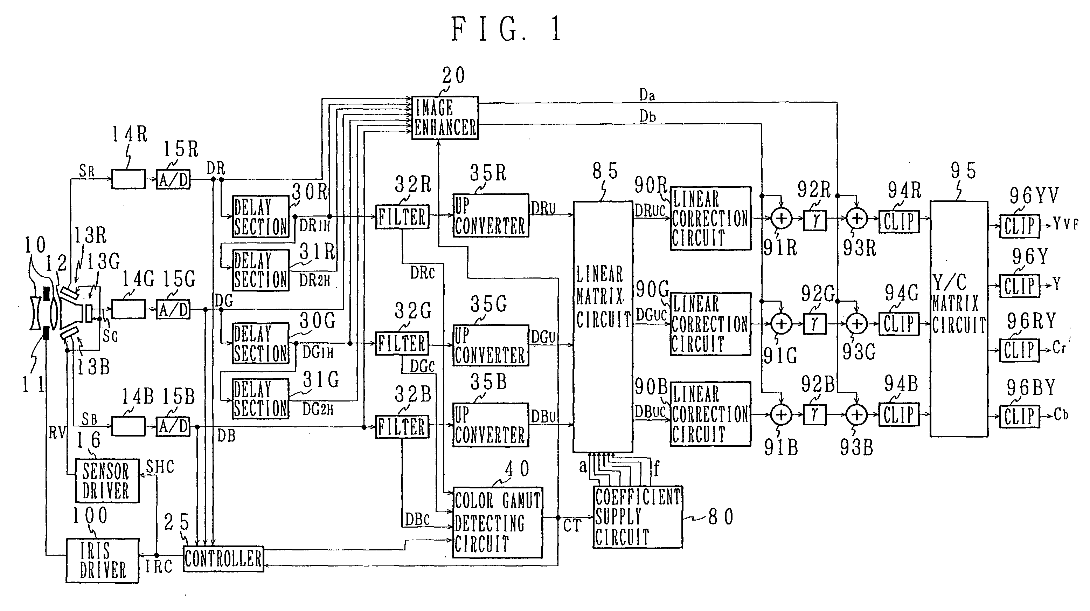

Referring to FIG. 1, a constitution of a video camera is shown. In this video camera, an incident ray is supplied to a colour separation prism via a lens 10 and an iris 11. Through the colour separation prism, the incident ray is separated into a red ray, a green ray, and a blue ray to be supplied to image sensing devices (hereinafter referred as CCD image sensors) 13R, 13G, and 13B respectively, from which primaries signals are obtained as colour sensing signals. Through the lens 10, an optical image of an object is formed on image sensing surfaces of the CCD image sensors 13R, 13G, and 13B. Through the iris 11, quantity of light to the CCD image sensors is controlled.

The image sensing signals SR, SG, and SB obtained from the CCD image sensors 13R, 13G, and 13B are supplied to A/D converters 15R, 15G, and 15B via analog process circuits 14R, 14G, and 14B respectively.

The analog process circuits 14R, 14G, and 14B perform level control such as white balance and black balance as well as defect correction. The A/D converter 15R, 15G, and 15B digitize an analog image sensing signal by a first sampling signal (for example, 18 MHz) and a clock signal CK1 to provide the digitized signal as primaries image sensing signals DR, DG, and DB. These primaries image sensing signals DR, DG, and DB are supplied to an image enhancer 20 and, at the same time, to a controller 25.

The red image sensing signal DR is delayed by one horizontal scan interval by a delay section 30R to be supplied to the image enhancer 20 as a red image sensing signal DR1H. Further, the red image sensing signal DR1H is delayed by one horizontal scan interval by a delay section 31R to be supplied to the image enhancer 20 as a red image sensing signal DR2H.

Similarly, the green image sensing signal DR is delayed by one horizontal scan interval by a delay section 30G to be supplied to the age enhancer 20 as a green image sensing signal DG1H. Further, the green image sensing signal DG1H is delayed by one horizontal scan interval by a delay section 31G to be supplied to the image enhancer 20 as a green image sensing signal DG2H. The blue image sensing signal DB is supplied to the image enhancer 20 and the controller 25.

Further, the blue image sensing signal DB and the red image sensing signal DR1H and green image sensing signal DG1H in which the blue image sensing signal DB corresponds to image position are supplied to filters 32R, 32G, and 32B.

The image enhancer 20 uses the red image sensing signals DR, DR1H and DR2H, the green image sensing signal DG, DG1H and DG2H, and the blue image sensing signal DB to generate detail signals Da and Db for emphasizing image contours and controls the signal levels of the detail signals Da and Db based on a colour gamut detect signal CT coming from a colour gamut detecting circuit 40 to be described later.

The filters 32R and 32B are composed of a delay element and a lowpass filter. The digital red image sensing signal and blue image sensing signal delayed by the delay element for a specified time are supplied to up converters 35R and 35B. The digital red image sensing signal and blue image sensing signal limited by the lowpass filter in band are supplied to the colour gamut detecting circuit 40 as a red image sensing signal DRC and a blue image sensing signal DBC.

A filter 32G is composed of a delay element and an interpolating filter. The digital green image sensing signal delayed by the delay element for a predetermined time is supplied to an up converter 35G. In addition, a green image sensing signal matched in phase with the red image sensing signal DRC and the blue image sensing signal DBC through the interpolating filter is supplied to the colour gamut detecting circuit 40.

In the up converters 35R, 35G, and 35B, the digital primaries image sensing signals coming from the filters 32R, 32G, and 32B are converted (up-converted) based on a clock signal CK2 having a frequency sufficiently higher, double (36 MHz) for example a first sampling frequency fs in the A/D converters 15R, 15G, and 15B, the conversion result being supplied to a linear matrix circuit 85.

The colour gamut detecting circuit 40 determines whether the input signal is in a particular colour gamut based on the primaries signals DRC, DGC, and DBC coming from the filters 32R, 32G, and 32B. The following describes a colour gamut detecting method.

If the input signals are (R, G, B), then luminance signal W (the signal before non-linear level conversion such as γ correction) is expressed in equation 1. (x, y) indicated by (x) and (y) calculated by equations 2 and 3 is known as a quantity having information about colour alone.

[Mathematical expression 3]

$$W = 0.30R + 0.59G + 0.11B \qquad (1)$$

$$x = (R - W)/W \qquad (2)$$

$$y = (B - W) / W \qquad (3)$$

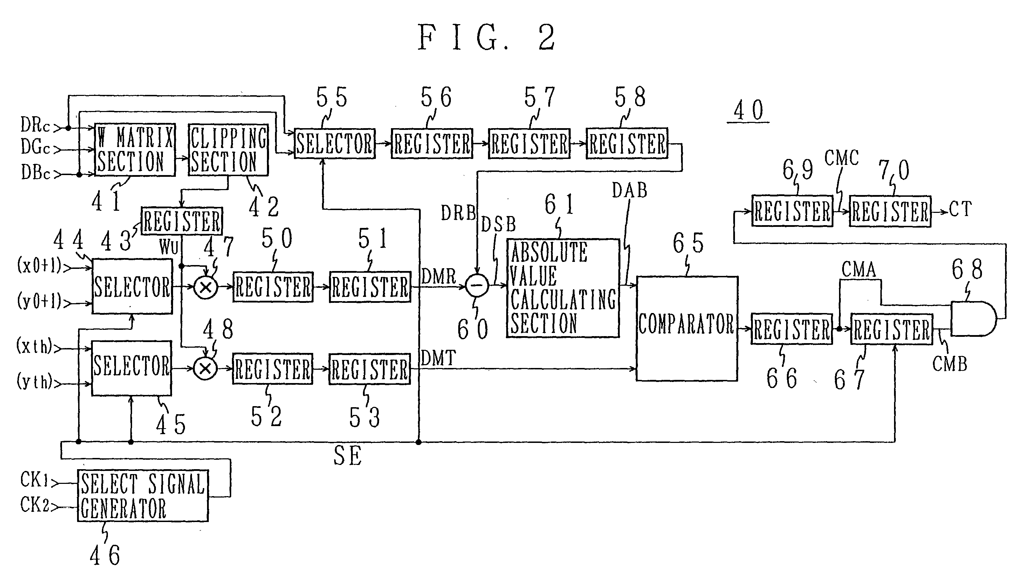

If reference colours (x0, y0) for detecting whether the input signals are in a particular colour gamut as shown in FIG. 2 and detection threshold values xth and yth are set, the input signals can be found in a range of the particular colour gamut if (x) satisfies equation 4 and (y) satisfies equation 5.

[Mathematical expression 4]

$$|xo - x| \leq xth \qquad (4)$$

$$|yo - y| \leq yth \qquad (5)$$

Substituting the equations 4 and 5 into equations 2 and 3 obtains equations 6 and 7. The equations 6 and 7 allow the detection whether the input signals are in the range of the particular colour gamut without performing a dividing operation, thereby facilitating colour gamut detection processing.

[Mathematical expression 5]

$$|Wx0 - (R-W)| \leq Wxth \qquad (6)$$

$$|Wy0 - (B - W)| \leq Wyth \qquad (7)$$

Further, arranging terms of the equations 6 and 7 obtains equations 8 and 9.

[Mathematical expression]

$$|W(x0 + 1) - R| \leq Wxth \qquad (8)$$

$$|W(y0 + 1) - B| \leq Wyth \qquad (9)$$

Because the equations 10 and 11 are established with the reference colours (xo, y0), (x0 + 1) and (y0 + 1) are positive values and therefore no sign bit need be added, thereby simplifying arithmetic operations.

[Mathematical expression 7]

$$x0 + 1 = R0/W0 \qquad (10)$$

$$y0 + 1 = B0/W0 \qquad (11)$$

Still further, replacing (x0 + 1) of the equation 8 with (y0 + 1), (xth) with (yth), and (R) with (B) equates the equation 9, so that multiplexing (x0 + 1) with (y0 + 1), (xth) with (yth), and (R) with (B) in time division manner allows the arithmetic operation by a circuit of small scale.

FIG. 2 shows a constitution of the colour gamut detecting circuit 40 that uses the above-mentioned colour gamut detecting method.

In FIG. 2, the primaries image sensing signals DRC, DGC, and DBC with the phases matched are supplied to a W matrix section 41. The red image sensing signal DRC and the blue image sensing signal DBC are supplied to a selector 55 to be described later.

In the W matrix section 41, the processing of the equation 1 is performed. The luminance signal W calculated based on the equation 1 is supplied to multipliers 47 and 48 as a luminance signal WU via a clipping section 42 and a register 43. The register 43 and registers 50 through 53, 56 through 58, and 66 are driven by the clock signal CK2 and, at the same time, the register 69 is driven by the clock signal CK1.

The controller 25 of FIG. 1 has an integrating circuit that integrates the primaries image sensing signals DR, DG, and DB of a specified gamut of an object to calculate integral values RS, GS, and BS. From the integral values RS, GS, and BS, a luminance integral value WS is calculated based on equation 12 and reference colours (x0 + 1) and (y0 + 1) are calculated based on the luminance integral value WS and the integral values RS and GS from equations 13 and 14.

[Mathematical expression 8]

$$WS = 0.30RS + 0.59GS + 0.11BS \qquad (12)$$

$$x0 + 1 = RS/WS \qquad (13)$$

$$y0 + 1 = BS/WS \qquad (14)$$

Thus, the reference colours (x0 + 1) and (y0 + 1) calculated by the controller 25, the gamut setting means, are supplied to a selector 44. In the controller 25, the detection threshold values (xth) and (yth) are set to be supplied to a selector 45. It should be noted that the detection threshold values (xth) and (yth) are variable for the best colour gamut detection.

A select signal generator 46 is supplied with the clock signal CK1 from a signal generator, not shown, and the clock signal CK2 having a frequency double the frequency of the clock signal CK1. Based on the clock signals CK1 and CK2, a selector control signal SE is generated. The selector control signal SE is supplied to the selectors 44, 45 and a selector 55.

In the selectors 44 and 45, the reference colour (x0 + 1) and the detection threshold value (xth) are selected or the reference colour (y0 + 1) and the threshold value (yth) are selected. The selected reference value (x0 + 1) or (y0 + 1) is supplied to a multiplier 47. The selected detection threshold value (xth) or (yth) is supplied to the multiplier 48.

The multiplier 47 multiplies the reference colour (x0 + 1) with the luminance signal WU or the reference colour (y0 + 1) with the luminance signal WU, the resultant data signal indicating the multiplication result being supplied to a subtractor 60 as a data signal DMR via the registers 50 and 51.

The multiplier 48 multiplies the detection threshold value (xth) with the luminance signal WU or the detection threshold value (yth) with the luminance WU, the data signal indicating the multiplication result being supplied to a comparator 65 as data signal DMT via the registers 52 and 53.

The selector 55 selects the red image sensing signal DRC if the reference colour (x0 + 1) and the detection threshold value (xth) have been selected by the selectors 44 and 45 based on the selector control signal SE coming from the select signal generator 46. The selector 55 selects the blue image sensing signal DBC if the reference colour (y0 + 1) and the detection threshold value (yth) have been selected by the selectors 44 and 45. The red image sensing signal DRC or the blue image sensing signal DBC selected by this selector 55 is supplied to the subtractor 60 as a select data signal DRB via the registers 56, 57, and 58.

The subtractor 60 subtracts the select colour data signal DRB from the data signal DMR to supply a subtraction signal DSB to an absolute value calculating section 61. Namely, in the subtractor 60, operation (W(x0 + 1) - DRC) or (W(y0 + 1) - DBC) is performed, the operation result being supplied to the absolute value calculating section 61 as the subtraction signal DSB.

In the absolute value calculating section 61, the absolute value of the subtraction signal DSB is calculated and an absolute value signal DAB equivalent to the arithmetic operation of the left term of the equation 8 or 9 is supplied to the comparator 65.

The comparator 65 compares the absolute value signal DAB with the data signal DMT. If the absolute value signal DAB indicates an absolute value of the arithmetic operation result of (W(x0 + 1) - DRC), the data signal DMT indicates a result of the multiplication between the detection threshold value (yth) and the luminance signal WU. Hence, the compare signal indicating the compare result of the comparator 65 is a signal that indicates whether the equation 8 or 9 is satisfied.

The compare signal outputted from the comparator 65 is supplied to an AND gate 68 as a signal CMA via the register 66 and the AND gate 68 as a signal CMB via the register 66 and the register 67 driven by the selector control signal SE. An output signal of the AND gate 68 provides a signal CMC via the register 69 and provides a colour gamut detect signal CT via a register 70 driven by the clock signal CK1 to be supplied to the image sensor 20 and a coefficient supply circuit 80 as shown in FIG. 1.

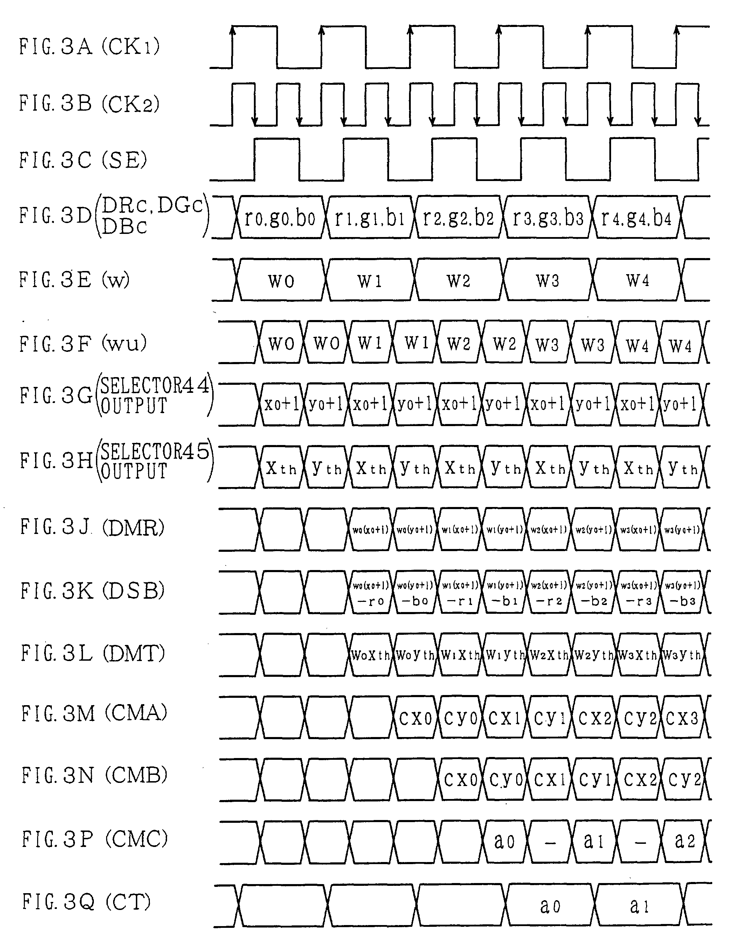

The following describes the operation of the colour gamut detecting circuit 40 with reference to FIG. 3. FIG. 3A shows the clock signal CK1 to be supplied to the select signal generator 46 of FIG. 2 while FIG. 3B indicates the clock signal CK2. Based on these clock signals CK1 and CK2, the selector control signal SE shown in FIG. 3C is generated. The selector signal SE is a signal of which signal level is inverted in synchronization with the falling edge (hereinafter referred to as a negative edge) of the clock signal CK2.

FIG. 3D indicates the primaries image sensing signals DRC, DGC, and DBC supplied from the filters 32R, 32G, and 32B. Based on these primaries image sensing signals DRC, DGC, and DBC, the luminance signal W of FIG. 3E is generated by the W matrix section 41 of FIG. 2. For example, if data values of the primaries image sensing signals DRC, DGC, and DBC are "r0, g0, b0", a data value of the luminance signal W is "W0"; if data values of the primaries image sensing signals DRC, DGC, and DBC are "r1, g1, b1", the data value of the luminance signal W is "w1". The luminance signal W provides a luminance signal WU of FIG. 3F when the data value of the luminance signal W is temporarily stored at the negative edge of the clock signal CK2.

When the signal level of the selector control signal SE is set to high level "H", the reference colour (x0 + 1) is selected by the selector 44 as shown in FIG. 3G and, at the same time, the detection threshold value (xth) is selected by the selector 45 as shown in FIG. 3H. When the signal level is set to low level (L), the reference colour (y0 + 1) is selector 44 and, at the same time, the detection threshold value (yth) is selected by the selector 45.

The multiplier 47 multiplies the reference colour (x0 + 1) or reference colour (y0 + 1) with the luminance signal WU. The multiplication result is supplied to the subtractor 60 via the registers 50 and 51. Hence, the data signal DMR to be supplied to the subtractor 60 is delayed by two periods of the clock signal CK2 as shown in FIG. 3J to be supplied to the subtractor 60.

The selector 55 selects the red image sensing signal DRC when the signal level of the selector control signal SE is set to high level "H" and the blue image sensing signal DBC when the signal level of the selector control signal SE is set to low level "L". The selected image sensing signal is supplied to the subtractor 60 via the registers 56, 57, and 58. Hence, a subtraction signal indicating a subtraction result in the subtractor 60 is as shown in FIG. 3K. The subtraction signal DSB is supplied to the absolute value calculating section 61 in which the absolute value thereof is calculated. An absolute value signal DAB indicating a calculation result in the absolute value calculating section 61 is supplied to the comparator 65.

The multiplier 48 multiplies the detection threshold value (xth) or (yth) selected by the selector 45 with the luminance signal WU of FIG. 3F as shown in FIG. 3H. A result of this multiplication is supplied to the comparator 65 via the registers 52 and 53. Hence, the data signal DMT to be supplied to the comparator 65 is delayed by two periods of the clock signal CK2 to be supplied to the comparator 65 as shown in FIG. 3L.

The comparator 65 compares the absolute value signal DAB with the data signal DMT to generate a compare signal, namely a signal indicating the result of the detection whether the equations 8 and 9 have been satisfied. The compare signal indicating this detection result is supplied to the AND gate 68 as the signal CMA via the register 66 and as the signal CMB via the registers 66 and 67 as shown in FIG. 3M.

Therefore, an output signal outputted from the AND gate 68 via the register 69 provides the CMC signal via the register 69 as shown in FIG. 3P. Further, via the register 70 driven by the clock signal CK1, only data correctly indicating whether the input signal is in a particular gamut to make this output signal the colour gamut detect signal CT as shown in FIG. 3Q.

It will be apparent that use of a comparator having hysterisis characteristic for the comparator 65 prevents the compare result from being changed due to a slight change in the signal level of the absolute value signal DAB or the data signal DMT, ensuring the stable colour gamut detection.

Thus, the colour gamut detect signal CT obtained by the colour gamut is supplied to the image enhancer 20, the controller 25, and the coefficient supply circuit 80.

The image enhancer 20 controls the signal levels of the detail signals Da and Db based on the colour gamut detect signal CT. For example, if the skin tone gamut has been detected, the signal levels of the detail signals Da and Db are lowered to prevent rough skin or the like from being emphasized.

The coefficient supply circuit supplies coefficients a through f to the linear matrix circuit 85. The values of the coefficients a through f are selected based on the colour gamut detect signal CT.

The linear matrix circuit 85 performs timing adjustment by means of a predetermined time delay through the filters 32R, 32G, and 32B. Further, this circuit performs colour correction by linear matrix operation using the primaries data signals DRU, DGU, and DBU up-converted by the converters 35R, 35G, and 35B the coefficients a through f supplied from the coefficient supply circuit 80. Because these coefficients a through f are selected based on the colour gamut detect signal CT, colour correction different between the detected particular colour gamut and another colour gamut can be performed. Hence, only skin tone can be adjusted without affecting colours of other gamuts for example.

Primaries data signals DRUC, DGUC, and DBUC obtained by the linear matrix circuit 85 are supplied to adders 91R, 91G, and 91B via linear correction circuits 90R, 90G, and 90B.

The adders 91R, 91G, and 91B are supplied with the detail signal Db generated in the image enhancer 20 and add the primaries data signals DRUC, DGUC, and DBUC to the detail signal Db respectively. A resultant addition signal is supplied to adders 93R, 93G, and 93B via γ correction circuits 92R, 92G, and 92B.

The adders 93R, 93G, and 93B are supplied in advance with the detail signal Da generated in the image enhancer 20 and add the addition signal supplied via the γ correction circuits to the detail signal Da to control the signal level of the addition signal supplied via the γ correction circuits 92R, 92G, and 92B. An addition signal obtained by these adders 93R, 93G, and 93B is supplied to a Y/C matrix circuit 95 via clipping circuits 94R, 94G, and 94B.

The Y/C matrix circuit 95 generates a luminance Y and colour difference signals Cr and Cb from the addition signal supplied via the clipping circuits 94R, 94G, and 94B to output the generated signals via clipping circuits 96Y, 96RY, and 96BY. A luminance signal YVF for a view finder is also generated to be supplied to the view finder, not shown, via a clipping circuit 96YV.

The controller supplied with the colour gamut detect signal CT from the colour detecting circuit 40 selects the primaries image sensing signals DR, DG, and DB provided at detection of the particular colour gamut based on the colour gamut detect signal CT to generate an iris control signal IRC based on the detected primaries image sensing signals DR, DG, and DB, the generated iris control signal being supplied to an iris driver 100. Alteratively, a shutter control signal SHC is generated to be supplied to the sensor driver 16.

The iris driver 100 generates an iris drive signal IRD based on the iris control signal IRC to drive the iris 11. Therefore, control can be performed such that an optimum light quantity is provided on the skin tone gamut for example. The image sensor driver 16 controls the image sensor drive signal RV based on the shutter control signal SHC to control a charge storage time in the CCD image sensors 13R, 13G, and 13B, or varies the speed of an electronic shutter, thereby providing an image sensing signal of desired level. It will be apparent that, instead of the iris 11 and the electronic shutter, a liquid crystal or an ND (Neutral Density) filter adjustable in light attenuation amount composed of two polarised filters may be used.

Thus, according to the above-mentioned embodiment, the luminance signal W is obtained from the primaries image sensing signals DRC, DGC, and DBC. By use of this reference signal W, the red image sensing signal DRC, the blue image sensing signal DBC, the reference colours (x0 +1) and (y0 + 1) for setting a particular colour gamut, and the detection threshold values (xth) and (yth), colour gamut detection can be performed without being affected by luminance, so that, if brightness of an object is changed by lighting or aperture of image sensing apparatus, colour gamut detection can be performed with stability. In addition, colour gamut detection can be performed based on only colour information without being affected by luminance, thereby providing precision colour gamut detection.

The above-mentioned colour gamut detection is performed by selection between the red image sensing signal DRC, the reference colour (x0 +1) and the detection threshold value (xth), and the blue image sensing signal DBC, the reference colour (y0 + 1) and the detection threshold value (yth) in a time division manner and without involving any division operation, resulting in a reduced circuit scale of the colour gamut detecting circuit 40.

A particular colour gamut is detected by the colour gamut detecting circuit 40 and the coefficient supply circuit 80 is controlled based on the detect signal CT that indicates the detection result, upon which the coefficients used in the linear matrix operation in the linear matrix circuit 85 are switched between automatically. Hence, the coefficient for a particular colour gamut and the coefficient for another colour gamut can be set to different values, so that the particular colour gamut and another colour gamut can be adjusted in skin tone of a person and a background colour separately by automatically switching between colour corrections according to the different colour gamuts.

Further, based on the detect signal CT coming from the colour gamut detecting circuit 40, the controller 25 selects the image sensing signal of a particular colour gamut. The iris 11 or the speed of the electronic shutter is automatically controlled based on the selected image sensing signal, so that an object can be imaged at a desired brightness without being affected by the variation of background brightness.

In the above-mentioned embodiment, detection of a particular colour gamut is performed with precision by use of the luminance signal W (the signal before nonlinear level conversion such as γ correction). It will be apparent to those skilled in the art that, if the detection accuracy is at an allowable level, the detection processing can be performed by use of a luminance signal Y or the like on which nonlinear processing such as γ correction was performed.

As mentioned above and according to at least embodiments of the invention, a colour gamut is set by use of the first colour information and the second colour information not affected by luminance and a detect signal indicating whether the input signal is in the range of this colour gamut is generated, so that colour gamut detection can be performed without being affected by luminance. Also, the colour gamut detection processing is performed without involving division operation and the detection of the first colour information and the second colour information is performed in a time division manner. In the image sensing apparatus, a desired correction is performed on a particular colour gamut without being affected by luminance.

Consequently, even if the brightness of an object changes due to a change in lighting condition or aperture, stable colour gamut detection can be provided. Further, because the colour gamut detection is performed based on only colour information, colour gamut detection can be made with precision. In addition, the colour gamut detection processing does not involve any division operation and such processing is performed in a time division manner, resulting in reduced circuit scale of the colour gamut detecting circuit.

In summary, at least preferred embodiments of the present invention relate to a colour gamut detecting circuit and an image sensing apparatus using the same. To be more specific, a colour gamut is set by use of first colour information and second colour information that are not affected by luminance, it is determined whether an input signal is in the range of the colour gamut, and colour gamut detection is performed without being affected by luminance. In addition, image correction corresponding to a particular colour gamut is performed based on a colour gamut detection result.

**Claims**

1.  A colour gamut detecting circuit comprising:

    gamut setting means (25) for setting a colour gamut by use of first colour information and second colour information; and
    detect signal generating means for determining whether an input signal is inside said colour gamut to generate a detect signal (CT);

    **characterised in that**:

    the gamut setting means (25) is operative to set said first colour information as

    $$x = (R-W)/W$$

    and said second colour information as

    $$y = (B-W)/W,$$

where W is a luminance signal W, R is a red signal R, and B is a blue signal;

the gamut setting means (25) is operative to set a reference colour x0 of said first colour information, a reference colour y0 of said second colour information, a detection threshold value xth indicating a gamut range of said first colour information, and a detection threshold value yth indicating a gamut range of said second colour information; and

said detect signal generating means is operative to multiply said reference colours x0 and y0, said detection threshold values xth and yth, and said first colour information and said second colour information by said luminance signal W to generate a detect signal (CT) based on whether the following conditions are satisfied or not:

$$|W(x0+1)-R| \leq Wxth$$

$$|W(y0+1)-B| \leq Wyth.$$

2. A colour gamut detecting circuit according to claim 1, wherein said detect signal generating means is operative to perform, in a time division manner, detection of whether an input signal is in the gamut range of said first colour information and detection of whether the detected signal is in the gamut range of said second colour information, and to generate a detect signal (CT) based on results of the detection for said first colour information and said second colour information.

3. An image sensing apparatus comprising:

a colour gamut detecting circuit (40) according to claim 1 or claim 2; and
detail signal generating means (20) for generating a detail signal for correcting an image signal of a sensed image;

wherein a signal level of said detail signal is variable based on said detect signal (CT).

4. An image sensing apparatus to claim 3, including image signal generating means for generating an image signal having a second luminance signal Y by performing signal processing, including nonlinear level conversion, on said input signal.

**Patentansprüche**

1. Farbbereichs-Erfassungsschaltung, die umfasst:

ein Bereichs-Einstellmittel (25) zum Einstellen eines Farbbereichs durch Benutzung erster Farbinformation und zweiter Farbinformation und
ein Erfassungssignal-Erzeugungsmittel zum Bestimmen, ob ein Eingangssignal innerhalb des Farbbereichs liegt, um ein Erfassungssignal (CT) zu erzeugen,

**dadurch gekennzeichnet, dass**

das Bereichs-Einstellmittel (25) betriebsfähig ist, um die erste Farbinformation als

$$x = (R-W)/W$$

und die zweite Farbinformation als

$$y = (B-W)/W$$

zu setzen, wobei W ein Luminanz-Signal W ist, R ein Rot-Signal R ist und B ein Blau-Signal ist, das Bereichs-Einstellmittel (25) betriebsfähig ist, um eine Referenzfarbe x0 der ersten Farbinformation, eine Referenzfarbe y0 der zweiten Farbinformation, einen Erfassungsschwellwert xth, der einen Bereich der ersten Farbinformation angibt, und einen Erfassungsschwellwert yth, der einen Bereich der zweiten Farbinformation angibt, zu setzen, und das Erfassungssignal-Erzeugungsmittel betriebsfähig ist, um die Referenzfarben x0 und y0, die Erfassungsschwellwerte xth und yth und die erste Farbinformation und die zweite Farbinformation mit dem Luminanz-Signal W zu multiplizieren, um ein Erfassungssignal (CT) basierend darauf, ob die folgenden Bedingungen

$$|W(x0+1)-R| \leq Wxth$$

$$|W(y0+1)-B| \leq Wyth.$$

erfüllt sind oder nicht, zu erzeugen.

2. Farbbereichs-Erfassungsschaltung nach Anspruch 1, bei der das Erfassungssignal-Erzeugungsmittel betriebsfähig ist, um in einem Zeitmultiplexbetrieb eine Erfassung, ob ein Eingangssignal in dem Bereich der ersten Farbinformation liegt, und eine Erfassung, ob das erfasste Signal in dem Bereich der zweiten Farbinformation liegt, durchzuführen und um ein Erfassungssignal (CT) auf der Grundlage von Ergebnissen der Erfassung für die erste Farbinformation und die zweite Farbinformation zu erzeugen.

3. Bildabtast-Vorrichtung, die umfasst:

eine Farbbereichs-Erfassungsschaltung (40) nach Anspruch 1 oder 2 und ein Einzelheitsignal-Erzeugungsmittel (20) zum Erzeugen eines Einzelheitsignals zum Korrigieren eines Bildsignals eines abgetasteten Bildes,

wobei ein Signalpegel des Einzelheitsignals auf der Grundlage des Erfassungssignals (CT) variabel ist.

4. Bildabtast-Vorrichtung nach Anspruch 3, die ein Bildsignal-Erzeugungsmittel zum Erzeugen eines Bildsignals enthält, das ein zweites Luminanz-Signal Y hat, durch Durchführen einer Signalverarbeitung, die eine nichtlineare Pegelumwandlung an dem Eingangssignal einschließt.

**Revendications**

1. Circuit de détection de gamme de couleurs comprenant :

des moyens de définition de gamme (25) permettant de définir une gamme de couleurs à l'aide d'informations de première couleur et d'informations de deuxième couleur ; et des moyens de génération d'un signal de détection permettant de déterminer si un signal d'entrée se situe à l'intérieur de ladite gamme de couleurs de façon à générer un signal de détection (CT) ;

**caractérisé en ce que** :

les moyens de définition de gamme (25) ont pour fonction de définir lesdites informations de première couleur sous la forme

$$x = (R-W)/W$$

et lesdites informations de deuxième couleur sous la forme

$$y = (B-W)/W,$$

où W est un signal de luminance, R est un signal du rouge et B est un signal du bleu ; les moyens de définition de gamme (25) ont pour fonction de définir une couleur de référence x0 desdites informations de première couleur, une couleur de référence y0 desdites informations de deuxième couleur, une valeur de seuil de détection xth indiquant une plage de gamme desdites informations de première couleur et une valeur de seuil de détection yth indiquant une plage de gamme desdites informations de deuxième couleur ; et lesdits moyens de génération d'un signal de détection ont pour fonction de multiplier lesdites couleurs de référence x0 et y0, lesdites valeurs de seuil de détection xth et yth, et lesdites informations de première couleur et lesdites informations de deuxième couleur par ledit signal de luminance W de façon à générer un signal de détection (CT) selon que les conditions suivantes sont satisfaites ou non :

$$|W(x0 + 1) - R| \leq Wxth$$

$$|W(y0 + 1) - B| \leq Wyth.$$

2. Circuit de détection de gamme de couleurs selon la revendication 1, dans lequel lesdits moyens de génération d'un signal de détection ont pour fonction de déterminer, par un procédé de répartition dans le temps, si un signal d'entrée se situe dans la plage de gamme desdites informations de première couleur et si le signal détecté se situe dans la plage de gamme desdites informations de deuxième couleur, et de générer un signal de détection (CT) sur base des résultats de la détection pour lesdites informations de première couleur et lesdites informations de deuxième couleur.

3. Appareil capteur d'images comprenant :

un circuit de détection de gamme de couleurs (40) selon la revendication 1 ou la revendication 2 ; et des moyens de génération d'un signal de détail (20) permettant de générer un signal de détail pour corriger un signal d'image d'une image détectée ;

dans lequel un niveau de signal dudit signal de détail peut varier en fonction dudit signal de détection (CT).

4. Appareil capteur d'images selon la revendication 3, comprenant des moyens de génération d'un signal d'image permettant de générer un signal d'image ayant un deuxième signal de luminance Y en procédant à un traitement de signal, notamment une conversion de niveau non linéaire, sur ledit signal d'entrée.

F I G. 1

# FIG. 2

EP 0 801 508 B1

FIG. 3A (CK1)

FIG. 3B (CK2)

FIG. 3C (SE)

FIG. 3D $\left(\begin{smallmatrix} DRc, DGc \\ DBc \end{smallmatrix}\right)$ | r0,g0,b0 | r1,g1,b1 | r2,g2,b2 | r3,g3,b3 | r4,g4,b4 |

FIG. 3E (w) | W0 | W1 | W2 | W3 | W4 |

FIG. 3F (wu) | W0 | W0 | W1 | W1 | W2 | W2 | W3 | W3 | W4 | W4 |

FIG. 3G $\left(\begin{smallmatrix} SELECTOR44 \\ OUTPUT \end{smallmatrix}\right)$ | x0+1 | y0+1 | x0+1 | y0+1 | x0+1 | y0+1 | x0+1 | y0+1 | x0+1 | y0+1 |

FIG. 3H $\left(\begin{smallmatrix} SELECTOR45 \\ OUTPUT \end{smallmatrix}\right)$ | Xth | Yth | Xth | Yth | Xth | Yth | Xth | Yth | Xth | Yth |

FIG. 3J (DMR) | w0(x0+1) | w0(y0+1) | w1(x0+1) | w1(y0+1) | w2(x0+1) | w2(y0+1) | w3(x0+1) | w3(y0+1) |

FIG. 3K (DSB) | w0(x0+1)−r0 | w0(y0+1)−b0 | w1(x0+1)−r1 | w1(y0+1)−b1 | w2(x0+1)−r2 | w2(y0+1)−b2 | w3(x0+1)−r3 | w3(y0+1)−b3 |

FIG. 3L (DMT) | W0Xth | W0Yth | W1Xth | W1Yth | W2Xth | W2Yth | W3Xth | W3Yth |

FIG. 3M (CMA) | CX0 | CY0 | CX1 | CY1 | CX2 | CY2 | CX3 |

FIG. 3N (CMB) | CX0 | CY0 | CX1 | CY1 | CX2 | CY2 |

FIG. 3P (CMC) | a0 | − | a1 | − | a2 |

FIG. 3Q (CT) | a0 | a1 |

# F I G. 4